# FASCICULE DE BREVET EUROPEEN

(11) **EP 3 186 034 B1**
(45) Date de publication et mention de la délivrance du brevet: **24.04.2024**
(21) Numéro de dépôt: 15767210.6
(22) Date de dépôt: 20.08.2015
(51) Int. Cl.: B23P 6/00, B29C 73/06, F01D 5/28, B21J 15/02, B21J 15/50, F01D 5/14, F01D 5/00, F16B 5/04

(54) **RÉPARATION D'UN ASSEMBLAGE COMPRENANT UN CORPS PRINCIPAL ET UN RENFORT**
REPARATUR EINER BAUGRUPPE MIT EINEM HAUPTKÖRPER UND EINER VERSTÄRKUNG
REPAIR OF AN ASSEMBLY COMPRISING A MAIN BODY AND A REINFORCEMENT

(30) Priorité: 28.08.2014 FR 1458072
(43) Date de publication de la demande: 05.07.2017
(73) Titulaire: SAFRAN AIRCRAFT ENGINES, 75015 Paris (FR)
(72) Inventeur: QUEANT, Didier, 77550 Moissy-Cramayel Cedex (FR); MAGNAUDEIX, Dominique, 77550 Moissy-Cramayel Cedex (FR)
(74) Mandataire: Cabinet Beau de Loménie
(86) Numéro de dépôt international: PCT/FR2015/052242
(87) Numéro de publication internationale: WO 2016/030614

(56) Documents cités:
- EP-A1- 1 916 051
- WO-A1-2007/133198
- DE-A1- 4 225 599
- DE-C1- 4 320 068
- JP-A- H10 156 633
- US-A- 4 738 594
- US-A- 4 984 347
- US-A1- 2011 186 206

## Description

### DOMAINE DE L'INVENTION

Le présent exposé concerne le domaine de la fabrication de pièces et plus particulièrement un procédé de réparation d'un élément profilé de turbomachine comprenant un corps principal et un renfort.

### ARRIÈRE-PLAN TECHNOLOGIQUE

Le document US 2011/186206 divulgue une technique de réparation de réseau de cuivre à des fins de protection d'une aile d'avion contre la foudre. On connaît par ailleurs des pièces formées de plusieurs parties, par exemple des éléments profilés de turbomachine comprenant un corps principal en matériau composite et un renfort métallique. Lors de l'utilisation de l'élément profilé en exploitation ou lors des phases de production, le renfort peut s'user ou être endommagé tandis que le corps principal est protégé. Ainsi, il peut être avantageux, en maintenance et en production, de remplacer le renfort tout en conservant le corps principal d'origine. Par exemple, le document JP H10-156633A décrit un procédé de réparation d'une structure ayant une cavité. Le document JP H10-156633A décrit un procédé selon le préambule de la revendication 1.

La structure comprend une coque creuse, à remplacer, initialement boulonnée à un corps. Un trou accueillant le boulon s'étend à travers la coque creuse et au moins une partie du corps.

Afin de ne pas fragiliser le corps principal, il est préférable de réutiliser les éléments de fixation (par exemple trou de rivetage, taraudage, etc.) déjà prévus sur le corps principal. Une telle opération nécessite toutefois de repérer exactement, sur le nouveau renfort, les positions de ces éléments de fixation. En pratique, ce repérage est souvent approximatif et l'utilisation d'éléments de fixation décalés, même légèrement, fragilise la structure du corps principal. Par exemple, l'aménagement d'un nouveau trou dans l'assemblage qui ne coïncide pas exactement avec un ancien trou a pour effet d'ovaliser l'ancien trou, ce qui compromet l'efficacité de sa fonction (aussi bien, par exemple, pour un trou taraudé que pour un trou de rivetage). Il existe donc un besoin pour un procédé de réparation d'un tel assemblage.

### PRÉSENTATION DE L'INVENTION

A cette fin, le présent exposé concerne un procédé de réparation d'un assemblage, à savoir un élément profilé de turbomachine, selon la revendication 1.

Dans un tel procédé, les termes « ancien » (ou « initial ») et « nouveau » font référence à deux renforts dans leur ordre d'installation sur le corps principal au cours du procédé. Ces termes ne présagent en rien de l'utilisation qui est faite par ailleurs de ces renforts ou de leur bon ou mauvais état, ou encore de leur usure. En outre, le nouveau renfort peut être similaire à l'ancien renfort, ce qui signifie que le nouveau renfort est sensiblement identique à l'ancien renfort tel qu'il était à l'origine. Les deux renforts ne peuvent pas être identiques, notamment parce que l'ancien renfort contient un trou là où le nouveau n'en comporte pas, précisément à l'endroit où l'on veut en ménager un. Par ailleurs, dans un cadre de maintenance et/ou de réparation, l'ancien renfort peut être déformé, par exemple par l'usure ou l'endommagement, tandis que le nouveau renfort aura une géométrie un peu différente.

De même, le trou initial est le trou présent avant le bouchage par le bouchon, le nouveau trou est le trou formé postérieurement au bouchage par le bouchon.

Le nouveau renfort peut être fixé par exemple par collage. Le nouveau trou peut être aménagé par exemple par perçage. Le renfort peut être un renfort extérieur au corps principal, par exemple un clinquant.

Si le trou initial n'était pas bouché et que le nouveau trou était aménagé près du trou initial, sans que les deux trous ne soient tout à fait confondus, le nouveau trou serait plus large que désiré. Par exemple, l'aménagement d'un trou cylindrique recouvrant partiellement un autre trou cylindrique crée un trou de section sensiblement ovale ; or ceci n'est pas souhaitable, notamment lorsque le trou contribue à une fixation pour laquelle la forme du trou est importante (par exemple trou taraudé, trou de rivetage, etc.). A l'inverse, le procédé ci-dessus permet d'éviter toute ovalisation et de s'assurer que le nouveau trou a bien la forme que l'on veut lui donner.

De plus, ce procédé est simple à mettre en oeuvre et entièrement générique, ce qui rend son application possible pour une grande variété d'assemblages et de géométries.

Dans certains modes de réalisation, le procédé comprend la fixation du bouchon sur le corps principal avant la fixation du nouveau renfort. Cette fixation du bouchon sur le corps principal peut être opérée par collage ou toute autre technique adaptée. De cette façon, le bouchon tient davantage au corps principal que s'il était maintenu par simple friction ou par le nouveau renfort le recouvrant. En particulier, le bouchon peut être fixé dans le trou. Le bouchon peut être fixé par collage ou tout autre moyen de fixation adapté.

Dans certains modes de réalisation, le procédé comprend l'arasement du bouchon avant de fixer le nouveau renfort, de sorte que le bouchon soit de niveau avec la surface du corps principal sur laquelle il débouche. Une telle étape présente un double avantage : d'une part, le nouveau renfort peut ainsi être fixé au plus près de ladite surface du corps principal. D'autre part, il est possible de produire les bouchons en série, avec une forme unique, sans adapter leur longueur à la géométrie de l'ancien trou dans lequel ils seront positionnés.

Le nouveau trou est ménagé au moins en partie dans le bouchon. La structure du corps principal est donc moins fragilisée par l'aménagement du nouveau trou. Par ailleurs, le matériau du bouchon a de ce fait une importance moindre puisque le bouchon est partiellement remplacé par le nouveau trou.

Dans certains modes de réalisation, le procédé comprend en outre le rivetage de l'assemblage après avoir ménagé le nouveau trou dans l'assemblage. Dans de tels modes de réalisation, l'importance d'avoir un trou non ovalisé ressort particulièrement : en effet, si le trou était ovalisé, il y aurait un jeu autour du rivet et le rivet ne maintiendrait pas l'assemblage de manière satisfaisante.

En outre, lorsque le nouveau trou n'est pas exactement ménagé à l'emplacement du bouchon, il reste des parties du bouchon dans l'assemblage après l'aménagement du trou et le rivetage de l'assemblage. Les parties restantes du bouchon servent avantageusement de douille et/ou rondelle au rivet. Ledit rivet peut, par ailleurs, contenir également en lui-même une douille et/ou une rondelle.

Dans certains modes de réalisation, le trou initial du corps principal a une forme évasée vers le renfort et le bouchon comprend une partie tronconique. Dire que le trou initial a une forme évasée vers le renfort signifie que le trou initial du corps principal a une section plus grande du côté du renfort que du côté du corps principal (au moins sur un tronçon dudit trou). Les caractéristiques de ces modes de réalisation sont particulièrement adaptées à l'utilisation du trou pour une fixation du renfort par rivetage. En outre, la partie tronconique du bouchon peut s'adapter aisément à la forme évasée du trou initial et faciliter l'ajustement du bouchon.

Dans certains modes de réalisation, le bouchon a des propriétés mécaniques du même ordre de grandeur que celles du corps principal. Dire que deux quantités sont du même ordre de grandeur signifie, selon l'acception communément admise scientifiquement, qu'elles diffèrent l'une de l'autre au plus d'un facteur dix. Les propriétés mécaniques visées peuvent être choisies dans le groupe contenant : la résistance, la dureté, la ductilité, la rigidité, la ténacité, le module d'Young, le coefficient d'expansion thermique, et les grandeurs obtenues par calcul à partir des précédentes.

Le présent exposé concerne également un procédé de réparation d'un élément profilé de turbomachine comprenant un corps principal, un premier ancien renfort et un deuxième ancien renfort, les deux anciens renforts étant disposés de part et d'autre du corps principal, l'élément profilé de turbomachine comportant un trou initial traversant le corps principal et les deux anciens renforts, le procédé comprenant le remplacement du premier ancien renfort à l'aide du procédé de réparation précédemment décrit, le remplacement du deuxième ancien renfort à l'aide du procédé de réparation précédemment décrit, et dans lequel les aménagements des trous dans les deux nouveaux renforts sont faits de sorte que le trou du côté du premier nouveau renfort et le trou du côté du deuxième nouveau renfort communiquent.

Dans un tel procédé, le remplacement du premier ancien renfort à l'aide du procédé précédemment décrit fait intervenir un nouveau renfort qu'on appelle premier nouveau renfort, et du côté duquel on ménage un premier trou (trou du côté du premier nouveau renfort). De même, le remplacement du deuxième ancien renfort à l'aide du procédé précédemment décrit fait intervenir un nouveau renfort qu'on appelle deuxième nouveau renfort, et du côté duquel on ménage un deuxième trou (trou du côté du deuxième nouveau renfort). Le premier nouveau renfort et le deuxième nouveau renfort peuvent être constitués par une même pièce, qui entoure donc au moins partiellement le corps principal.

Dans certains modes de réalisation, après le positionnement du premier bouchon et du deuxième bouchon, le premier bouchon et le deuxième bouchon sont espacés l'un de l'autre. En d'autres termes, le positionnement du premier bouchon et du deuxième bouchon est fait de telle sorte qu'il reste un espace entre les bouchons. On appelle premier bouchon (respectivement deuxième bouchon) le bouchon utilisé pour le remplacement du premier ancien renfort (respectivement deuxième ancien renfort).

L'espace laissé entre les bouchons permet que les bouchons ne se poussent pas l'un l'autre en cas de dilatation différentielle du corps principal et des bouchons. En effet, un contact entre les bouchons pourrait conduire au débouchage du trou.

Le présent exposé concerne également un procédé de réparation d'un élément profilé de turbomachine comprenant un corps principal, un premier ancien renfort et un deuxième ancien renfort, les deux anciens renforts étant disposés de part et d'autre du corps principal, l'élément profilé de turbomachine comportant un trou initial traversant le corps principal et les deux anciens renforts, le procédé comprenant :
- le retrait de l'ancien renfort ;
- le positionnement d'un premier bouchon d'un premier côté du trou initial du corps principal ;
- la fixation d'un premier nouveau renfort sur le premier côté du corps principal, le premier nouveau renfort recouvrant le premier bouchon ;
- le positionnement d'un deuxième bouchon d'un deuxième côté du trou initial du corps principal ;
- la fixation d'un deuxième nouveau renfort sur le deuxième côté du corps principal, le deuxième nouveau renfort recouvrant le deuxième bouchon ;
- l'aménagement d'un nouveau trou traversant le premier nouveau renfort, le deuxième nouveau renfort et le corps principal.

### BRÈVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :
- la figure 1 représente, en perspective, un assemblage muni d'un trou initial ;
- la figure 2 représente, en perspective, l'assemblage de la figure 1, dont on a retiré le renfort ;
- les figures 3A à 3E représentent en section les différentes étapes d'un procédé selon un mode de réalisation de l'invention.

### DESCRIPTION DÉTAILLÉE DE L'INVENTION

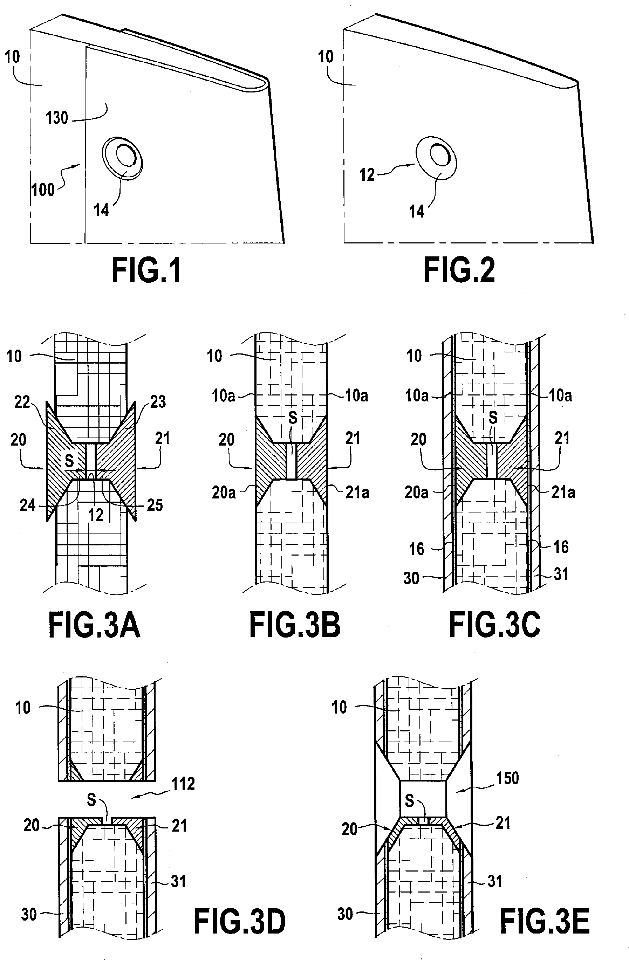

La figure 1 représente, en perspective, un assemblage 100 comprenant un corps principal 10 et un ancien renfort 130. L'assemblage 100 est un élément profilé de turbomachine. Par exemple, le corps principal 10 peut être en matériau composite. L'ancien renfort 130 peut être métallique. L'ancien renfort 130 est installé sur le corps principal 10 comme un renfort extérieur couvrant une partie du corps principal 10.

Un trou (trou initial) 12 traverse l'ancien renfort 130 et au moins une partie du corps principal 10. Dans le mode de réalisation décrit, le trou 12 est débouchant. Toutefois l'invention s'applique également au cas d'un trou non débouchant (trou borgne).

Dans le mode de réalisation décrit, le trou 12 est un trou de rivetage, c'est-à-dire un trou destiné à accueillir un rivet. Selon une variante, le trou 12 peut être un trou taraudé ou tout type de trou.

La figure 2 représente, en perspective, l'assemblage 100 auquel on a retiré l'ancien renfort 130. La figure 2 représente le corps principal 10 muni du trou 12. Dans le présent mode de réalisation, le trou initial 12 est évasé à ses extrémités (seule une extrémité évasée 14 est visible sur la figure 2).

Le retrait de l'ancien renfort 130 pour arriver à la situation représentée sur la figure 2 constitue une étape du procédé de réparation selon un premier mode de réalisation. Les étapes suivantes vont être détaillées en référence aux figures 3A à 3E, qui représentent des vues en coupe de l'assemblage 100 au fur et à mesure du procédé de réparation selon le présent mode de réalisation.

Comme représenté sur la figure 3A, un premier bouchon 20 et un deuxième bouchon 21 sont insérés dans le trou 12 du corps principal 10 (trou initial du corps principal). Les bouchons 20, 21 peuvent être insérés simultanément ou successivement dans le trou 12.

Les premier et deuxième bouchons 20, 21 sont ici identiques, mais ils pourraient être différents. Dans le présent mode de réalisation, le premier bouchon 20 comprend une partie sensiblement tronconique 22 et une partie sensiblement cylindrique 24. La partie sensiblement tronconique 22 épouse ici la forme de l'extrémité évasée 14 du trou 12. La partie sensiblement cylindrique 24 s'étend à partir de l'extrémité la plus étroite de la partie sensiblement tronconique 22.

Dans le présent mode de réalisation, les bouchons 20, 21 sont dans un matériau dont les caractéristiques mécaniques sont du même ordre de grandeur que celles du matériau formant le corps principal 10. Par exemple, dans le cas d'un corps principal en matériau composite, formé par une préforme, par exemple tissée, noyée dans une matrice, les bouchons 20, 21 peuvent être dans le matériau de la matrice ou en matériau composite à matrice renforcée. Par exemple, la préforme peut être formée de fibres de carbone. Par exemple, la matrice peut être faite de résine telle que la résine époxy.

Les deux bouchons sont séparés par un espace (S). Ainsi, les parties sensiblement cylindriques 24, 25 respectives des premier et deuxième bouchons 20, 21 se font face dans le trou 12. Cependant, les premier et deuxième bouchons ne sont pas en contact l'un avec l'autre. L'espace S peut être dimensionné notamment en fonction des caractéristiques thermomécaniques des bouchons 20, 21 et du corps principal 10. Par exemple, l'espace S peut être dimensionné de sorte qu'en cas de dilatation différentielle du corps principal 10 et des bouchons 20, 21, les bouchons n'entrent jamais en contact l'un avec l'autre. Ceci pourrait en effet faire apparaître un espace entre l'un des bouchons et l'extrémité 14 dans laquelle il est inséré, c'est-à-dire initier un débouchage de l'ancien trou 12.

Dans le présent mode de réalisation, les bouchons 20, 21 sont simplement introduits dans le trou 12 et ils sont maintenus par friction. Selon une variante, les bouchons pourraient être collés dans le trou 12 ou fixés par toute autre manière.

Comme représenté sur la figure 3B, chaque bouchon 20, 21 est arasé de sorte que sa surface externe 20a, 21a soit de niveau avec la surface 10a du corps principal sur laquelle il débouche. Cependant, il apparaîtra clairement à l'homme du métier que la situation représentée en figure 3B peut être obtenue par d'autres moyens, par exemple en coupant les bouchons 20, 21 à la longueur désirée avant leur insertion dans le trou 12 du corps principal, ou bien en fabriquant des bouchons ayant exactement la bonne forme (par exemple par moulage ou surmoulage directement dans le trou initial 12).

Comme illustré à la figure 3C, un premier nouveau renfort 30 et un deuxième nouveau renfort 31 sont fixés sur le corps principal 10. Dans certains modes de réalisation, les premier et deuxième nouveaux renforts 30, 31 forment une seule pièce, à l'instar de l'ancien renfort 130 ; dans ce cas, la pièce unique formée par les premier et deuxième nouveaux renforts 30, 31 peut entourer une partie du corps principal 10 de sorte que les premier et deuxième nouveaux renforts 30, 31 soient de part et d'autre du corps principal 10.

Dans le présent mode de réalisation, les premier et deuxième nouveaux renforts 30, 31 sont fixés au moyen d'une couche de colle 16 disposée entre lesdits nouveaux renforts et le corps principal 10. De plus, le premier nouveau renfort 30 recouvre au moins le premier bouchon 20. En d'autres termes, la surface externe 20a du premier bouchon 20 est recouverte par le premier nouveau renfort 30. De même, le deuxième nouveau renfort 31 recouvre au moins le deuxième bouchon 21. La surface externe 21a du deuxième bouchon 21 est recouverte par le deuxième nouveau renfort 31.

Les étapes présentées jusqu'à présent ont été introduites dans un certain ordre qui est particulièrement avantageux lorsque les deux nouveaux renforts 30, 31 sont deux parties d'une unique pièce qui est destinée à entourer au moins partiellement le corps principal 10. Toutefois, il est possible d'exécuter les étapes précédemment décrites dans d'autres ordres. Par exemple, il est possible de positionner (et araser le cas échéant) le premier bouchon 20 puis de fixer le premier nouveau renfort 30, et seulement ensuite de positionner le deuxième bouchon 21 (et de l'araser le cas échéant) et de fixer le deuxième nouveau renfort 31. Toutes les variantes d'ordre réalistes dans l'exécution de ces étapes peuvent être aisément déterminées par l'homme du métier.

Le procédé selon le présent mode de réalisation comprend en outre l'aménagement d'un nouveau trou traversant le nouveau renfort et au moins une partie du corps principal. Comme illustré sur la figure 3D, on a ici ménagé un nouveau trou 112 commun traversant le premier nouveau renfort 30 et le deuxième nouveau renfort 31 ainsi que le corps principal 10. En raison de la difficulté à localiser le trou initial 12 et à ménager un nouveau trou 112 exactement au même endroit, le nouveau trou 112 peut être désaxé par rapport au trou initial 12. Ceci se traduit par le fait que les bouchons 20, 21 ne sont souvent pas troués de manière axisymétrique par le trou 112, comme représenté sur la figure 3D.

Selon une étape subséquente optionnelle (non représentée), les extrémités du nouveau trou 112 peuvent être évasées, notamment par fraisage. Cet évasement peut être prévu par exemple dans le but d'accueillir un rivet, comme représenté sur la figure 3E. Sur cette figure, un rivet 150 remplit le trou 112 et contribue à maintenir les nouveaux renforts 30, 31 sur le corps principal 10.

Comme illustré à la figure 3E, les parties restantes des bouchons 20, 21 se trouvent en périphérie du rivet 150, entre le rivet 150 et le corps principal 10. A ce titre, les bouchons 20, 21 forment une sorte de douille pour le rivet 150, indépendamment d'une douille (non représentée) que pourrait contenir le rivet 150 par ailleurs. Hormis au niveau de l'espace S, les bouchons 20, 21 comblent l'espace qui pourrait exister entre le rivet 150 et le corps principal 10, permettant au rivet 150 d'être suffisamment calé et d'assurer convenablement sa fonction de maintien.

En outre, les parties restantes des bouchons 20, 21 sont bloquées, de part et d'autre, par les nouveaux renforts 30, 31. L'espace S permet aux bouchons 20, 21 de se dilater par rapport au corps principal 10 sans pour autant exercer d'effort important sur les nouveaux renforts 30, 31.

Bien que le premier mode de réalisation présenté mette en oeuvre deux bouchons, l'invention s'applique de manière analogue au cas d'un seul bouchon et d'un seul nouveau renfort (variante non revendiquée) ou au cas de deux bouchons et d'un seul nouveau renfort.

Bien que la présente invention ait été décrite en se référant à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Procédé de réparation d'un élément profilé de turbomachine (100) comprenant un corps principal (10) et un ancien renfort (130), l'élément profilé de turbomachine comportant un trou initial (12) traversant l'ancien renfort et au moins une partie du corps principal, le procédé comprenant :
- le retrait de l'ancien renfort (130) ;
- le positionnement d'un premier bouchon (20) d'un premier côté du trou initial (12) du corps principal (10) ;
- le positionnement d'un deuxième bouchon (21) d'un deuxième côté du trou initial (12) du corps principal (10), le premier bouchon (20) et le deuxième bouchon (21) étant espacés l'un de l'autre;
- l'arasement du premier bouchon (20), de sorte qu'une surface (20a) du premier bouchon soit de niveau avec la surface (10a) du corps principal sur laquelle le premier bouchon débouche ;
- l'arasement du deuxième bouchon (21), de sorte qu'une surface (21a) du deuxième bouchon soit de niveau avec la surface (10a) du corps principal sur laquelle le deuxième bouchon débouche ;
- après l'arasement du premier bouchon et du deuxième bouchon (20, 21), la fixation sur le corps principal (10) d'un nouveau renfort (30), le nouveau renfort recouvrant le premier bouchon (20) ;
- l'aménagement d'un nouveau trou (112) traversant le nouveau renfort (30) et au moins une partie du corps principal (10), le nouveau trou (112) étant ménagé au moins en partie dans le premier bouchon (20).

2. Procédé de réparation selon la revendication 1, dans lequel avant la fixation du nouveau renfort (30), le premier bouchon ou le deuxième bouchon (20, 21) est fixé sur le corps principal (10).

3. Procédé de réparation selon la revendication 1 ou 2, dans lequel le nouveau trou (112) est ménagé au moins en partie dans le deuxième bouchon (21).

4. Procédé de réparation selon l'une quelconque des revendications 1 à 3, comprenant en outre le rivetage de l'élément profilé de turbomachine (100) après avoir ménagé le nouveau trou (112) dans l'élément profilé de turbomachine.

5. Procédé de réparation selon l'une quelconque des revendications 1 à 4, dans lequel le trou initial (12) du corps principal (10) a une forme évasée vers le renfort et le bouchon (20, 21) comprend une partie tronconique (22, 23).

6. Procédé de réparation selon l'une quelconque des revendications 1 à 5, dans lequel le premier bouchon ou le deuxième bouchon (20, 21) a des propriétés mécaniques du même ordre de grandeur que celles du corps principal (10).

7. Procédé de réparation d'un élément profilé de turbomachine (100) comprenant un corps principal (10), un premier ancien renfort et un deuxième ancien renfort, les deux anciens renforts étant disposés de part et d'autre du corps principal, l'élément profilé de turbomachine comportant un trou initial (12) traversant le corps principal et les deux anciens renforts, le procédé comprenant le remplacement du premier ancien renfort à l'aide du procédé de réparation selon l'une quelconque des revendications 1 à 6, le remplacement du deuxième ancien renfort à l'aide du procédé de réparation selon l'une quelconque des revendications 1 à 6, et dans lequel les aménagements des trous dans les deux nouveaux renforts sont faits de sorte que le trou du côté du premier nouveau renfort et le trou du côté du deuxième nouveau renfort communiquent.

## Patentansprüche

1. Verfahren zur Reparatur eines Turbinentriebwerk-Profilelements (100), das einen Hauptkörper (10) und eine bisherige Verstärkung (130) umfasst, wobei das Turbinentriebwerk-Profilelement ein anfängliches Loch (12) beinhaltet, welches die bisherige Verstärkung und mindestens einen Teil des Hauptkörpers durchquert, wobei das Verfahren **dadurch gekennzeichnet ist, dass** es umfasst:
- Entfernen der bisherigen Verstärkung (130),
- Positionieren eines ersten Stopfens (20) auf einer ersten Seite des anfänglichen Lochs (12) des Hauptkörpers (10),
- Positionieren eines zweiten Stopfens (21) auf einer zweiten Seite des anfänglichen Lochs (12) des Hauptkörpers (10), wobei der erste Stopfen (20) und der zweite Stopfen (21) voneinander beabstandet sind,
- Abtragen des ersten Stopfens (20), derart dass eine Oberfläche (20a) des ersten Stopfens auf einer Höhe mit der Oberfläche (10a) des Hauptkörpers ist, auf welcher der erste Stopfen mündet,
- Abtragen des zweiten Stopfens (21), derart dass eine Oberfläche (21 a) des zweiten Stopfens auf einer Höhe mit der Oberfläche (10a) des Hauptkörpers ist, auf welcher der zweite Stopfen mündet,
- nach dem Abtragen des ersten Stopfens und des zweiten Stopfens (20, 21), Befestigen einer neuen Verstärkung (30) an dem Hauptkörper (10), wobei die neue Verstärkung den ersten Stopfen (20) bedeckt,
- Anordnen eines neuen Lochs (112), welches die neue Verstärkung (30) und mindestens einen Teil des Hauptkörpers (10) durchquert, wobei das neue Loch (112) mindestens teilweise in dem ersten Stopfen (20) angeordnet wird.

2. Reparaturverfahren nach Anspruch 1, wobei vor dem Befestigen der neuen Verstärkung (30) der erste Stopfen oder der zweite Stopfen (20, 21) an dem Hauptkörper (10) befestigt wird.

3. Reparaturverfahren nach Anspruch 1 oder 2, wobei das neue Loch (112) mindestens teilweise in dem zweiten Stopfen (21) angeordnet wird.

4. Reparaturverfahren nach einem der Ansprüche 1 bis 3, das ferner das Nieten des Turbinentriebwerk-Profilelements (100) umfasst, nachdem das neue Loch (112) in dem Turbinentriebwerk-Profilelement angeordnet wurde.

5. Reparaturverfahren nach einem der Ansprüche 1 bis 4, wobei das anfängliche Loch (12) des Hauptkörpers (10) eine hin zur Verstärkung aufgeweitete Form aufweist und der Stopfen (20, 21) einen kegelstumpfförmigen Teil (22, 23) umfasst.

6. Reparaturverfahren nach einem der Ansprüche 1 bis 5, wobei der erste Stopfen oder der zweite Stopfen (20, 21) mechanische Eigenschaften in der gleichen Größenordnung wie diejenigen des Hauptkörpers (10) aufweist.

7. Verfahren zur Reparatur eines Turbinentriebwerk-Profilelements (100), das einen Hauptkörper (10), eine erste bisherige Verstärkung und eine zweite bisherige Verstärkung umfasst, wobei die beiden bisherigen Verstärkungen auf beiden Seiten des Hauptkörpers angeordnet sind und das Turbinentriebwerk-Profilelement ein anfängliches Loch (12) beinhaltet, das den Hauptkörper und die beiden bisherigen Verstärkungen durchquert, wobei das Verfahren das Ersetzen der ersten bisherigen Verstärkung mittels des Reparaturverfahrens nach einem der Ansprüche 1 bis 6 und das Ersetzen der zweiten bisherigen Verstärkung mittels des Reparaturverfahrens nach einem der Ansprüche 1 bis 6 umfasst und wobei die Anordnungen der Löcher in den beiden neuen Verstärkungen derart vorgenommen werden, dass das Loch auf der Seite der ersten neuen Verstärkung und das Loch auf der Seite der zweiten neuen Verstärkung miteinander verbunden werden.

## Claims

1. A repair method for repairing a turbine engine airfoil element (100) comprising a main body (10) and an old reinforcement (130), the turbine engine airfoil element including an initial hole (12) passing through the old reinforcement and at least a portion of the main body, the method being **characterized by** comprising:
- removing the old reinforcement (130);
- positioning a first plug (20) on a first side of the initial hole (12) in the main body (10);
- positioning a second plug (21) on a second side of the initial hole (12) in the main body (10), the first plug (20) and the second plug (21) being spaced apart from each other;
- leveling the first plug (20) so that a surface (20a) of the first plug is flush with the surface (10a) of the main body in which the first plug lies;
- leveling the second plug (21) so that a surface (21a) of the second plug is flush with the surface (10a) of the main body in which the second plug lies;
- after leveling the first plug and the second plug (20, 21), fastening a new reinforcement (30) on the main body (10), the new reinforcement covering the first plug (20); and
- forming a new hole (112) passing through the new reinforcement (30) and at least a portion of the main body (10), the new hole (112) being formed at least in part in the first plug (20).

2. A repair method according to claim 1, wherein prior to fastening the new reinforcement (30), the first plug or the second plug (20, 21) is fastened to the main body (10) .

3. A repair method according to claim 1 or claim 2, wherein the new hole (112) is formed at least in part in the second plug (21).

4. A repair method according to any one of claims 1 to 3, further comprising riveting the turbine engine airfoil element (100) after forming the new hole (112) in the turbine engine airfoil element.

5. A repair method according to any one of claims 1 to 4, wherein the initial hole (12) in the main body (10) presents a shape that flares towards the reinforcement, and the plug (20, 21) comprises a frustoconical portion (22, 23) .

6. A repair method according to any one of claims 1 to 5, wherein the first plug or the second plug (20, 21) has mechanical properties of the same order of magnitude as the mechanical properties of the main body (10).

7. A repair method for repairing an turbine engine airfoil element (100) comprising a main body (10), a first old reinforcement and a second old reinforcement, the two old reinforcements being arranged on either side of the main body, the turbine engine airfoil element including an initial hole (12) passing through the main body and the two old reinforcements, the method comprising replacing the first old reinforcement using the repair method according to any one of claims 1 to 6, replacing the second old reinforcement using the repair method according to any one of claims 1 to 6, and wherein the holes are formed in the two new reinforcements in such a manner that the hole in the first new reinforcement and the hole in the second new reinforcement are in communication.
